# EUROPEAN PATENT SPECIFICATION

(11) **EP 3 813 517 B1**
(45) Date of publication and mention of the grant of the patent: **04.01.2023**
(21) Application number: 19808784.3
(22) Date of filing: 22.11.2019
(51) Int. Cl.: A01K 61/13, A01K 63/06

(54) **AN APPARATUS FOR DESTROYING PARASITES ON FISH**
VORRICHTUNG ZUM VERNICHTEN VON PARASITEN AUF FISCHE
APPAREIL DE DESTRUCTION DE PARASITES SUR DES POISSONS

(30) Priority: 22.11.2018 GB 201819016
(43) Date of publication of application: 05.05.2021
(73) Proprietor: Atlantic Photonic Solutions Ltd., Castlebar Mayo (IE)
(72) Inventor: CASEY, Rory, Castlebar, County Mayo (IE)
(74) Representative: FRKelly
(86) International application number: PCT/EP2019/082197
(87) International publication number: WO 2020/104641

(56) References cited:
- EP-A1- 2 962 556
- WO-A1-2018/099504
- US-B2- 9 072 281

## Description

### TECHNICAL FIELD

The present invention relates an apparatus for destroying parasites on fish. In particular the invention has application in the treatment of sea lice parasites on salmon and similar fish.

### BACKGROUND ART

The global salmon farming industry is estimated to be worth USD$14 billion per annum, with a total of 2,073,500 tons of salmon harvested by Norwegian seafood company Marine Harvest in 2017 alone. As demand for salmon and many other breeds of fish has multiplied, the farmed fish industry has grown in equal measure. Accommodating the growth of this market has led to fish farms with populations as large as tens of thousands per acre. A common problem for salmon farmers in particular is sea lice - small parasites which cling to the bodies of the salmon and feed on flesh and blood. These sea lice are known to cause a reduction in fish growth as well as a loss in appetite, factors which reduce farmer profits as well reducing the quality of food and standard of animal welfare. Moreover, salmon lice can cause severely damaged fins and skin lesions, and thereby physiological stress, and furthermore problems with salt regulation, increased susceptibility to other infections and reduced disease resistance in individual fish. Salmon lice can also cause reduced swimming performance. Sea lice can also cause the spread of disease amongst a farm population. Marine Harvest estimate that sea lice can wipe out up to 12% of a farm population. Consequently, strong antibiotics are often required to be introduced to fish feed, the residual traces of which are then found in the products consumers purchase in supermarkets and elsewhere. This has led to concerns about increased antibiotic resistance in humans.

As well as spreading disease within a farm population itself, sea lice can spread disease outwards to wild populations of fish when farms are situated off-shore or on rivers. This has led to an observed reduction in the numbers of various wild fish populations - and in particular salmon - worldwide, having wider negative implications for the global ecosystem.

Treating sea lice infestations is expensive. Chemical treatment with hydrogen peroxide is effective in removing sea lice and is considered one of the more environmentally friendly options, however there is a significant risk of wiping out an entire farm population if the volume of hydrogen peroxide used and the time of exposure is not monitored very closely. A thermolicer, in which the fish are introduced to a warm bath to kill the lice, has immediate effect but can cause the death of a significant percentage of the farm population due to the warm water temperatures. Alternatively a hydrolicer allows farmers to power wash parasites off the fish, but this can cause damage to the scales of the fish and furthermore their epidermal mucus, which acts as a skin-level protective barrier of immunity to many forms of pathogens and is considered a significant determinant in fish health.

US Published Patent No. US9072281B2 relates to a device for destroying parasites on fish, such as salmon lice on salmon in fish farms, comprising a camera communicating with a controlling unit which in turn communicates with a light source adapted to fire pulses of point shaped light which is harmful for the parasite in question. The camera identifies the position of lice using contrast, and these positions are fed to the laser control. This apparatus is expensive (leasing costs of approximately USD$35,000 per year), demanding significant processing power and costly technical features and assembly. Also EP2962556 discloses a device for destroying parasites on fish.

WO2018/099504 discloses a method for combating salmon lice and other ectoparasites in aquaculture, in which fish are directed through a conduit with UV light sources disposed radially therein.

Similarly to WO2018/099504, UK Patent Application GB2309621A relates a method for allegedly reducing parasite infestation in aquacultures wherein a fish is directed through a conduit containing radially-positioned transducers configured to generate "transient cavitational events" to remove lice from fish. A detector may detect the presence of a fish in the conduit and, in cooperation with a controller, trigger the transducers. GB2309621A also discloses the use of a counter to count the number of fish passing through the conduit.

Since fish are primarily farmed as a source of food, it is well understood that the health of the fish is a priority of fish farmers. Exposure to a high-powered light source such as in WO2018/099504, even for a short period of time, may cause damage to the cornea and could result in cataracts (all leading to impaired vision, if not blindness) if the eyes of the fish are exposed to the light source. If a fish is partially or fully blinded by the light source, their ability to locate their food and thus feed is diminished or completely removed altogether. Not only does the inability to feed damage the general health of the fish and often lead to death, where the fish survive the quality of the food product provided at the consumer end is dramatically diminished.

It is therefore desirable to develop an apparatus which is both cost effective and less technically demanding in its configuration, which offers the ability to destroy parasites in a short time without risk of death to a farm population or other negative effects on the health thereof, and without compromising the ethical or environmental integrity of its character.

### SUMMARY

Accordingly, there is provided an apparatus according to claim 1 for facilitating the treatment of parasites on fish, comprising;
a conduit having first and second open ends and an internal passage to accommodate a fish passing from the first end to the second end through the internal passage;
a light source adapted to illuminate a section of the internal passage radially inwardly from substantially all sides simultaneously, such that a fish moving through said section is illuminated from substantially all sides when the light source is activated;
a detecting means for detecting a fish moving through the conduit; and
a control means configured to activate the light source in response to the detection of a fish by the detection means, wherein the detecting means is positioned relative to the light source, and the control means is configured to activate the light source only when the eyes of the fish are beyond the section illuminated by the light source.

In contrast to existing approaches to the treatment of parasites such as sea lice, the apparatus of the present disclosure does not attempt to remove the parasites mechanically or thermally, or to identify and destroy them individually with targeted lasers. Instead, the present disclosure subjects the fish to a treatment by light that acts on the entire fish, with the exception possibly of the head and eyes, as it moves past a radially inwardly directed light source (which may be a single source or several sources). The apparatus does not require complex control of a directed light source to individual points on the fish, and can be implemented using simple mechanical or optical detectors to detect the presence or passage of the fish.

In some embodiments, the term 'destroy' as used in 'destroying a parasite' may mean to cause the death of a parasite. In some embodiments, the term 'destroy' as used in 'destroying a parasite' may mean a reduction of ability of the parasite to move (or even total paralysis of the parasite), such that it is neutralised as a threat to the fish. Moreover, paralysis may be temporary or permanent.

It is of great importance that the fish not be blinded in the process both from an ethical standpoint and from the standpoint that without vision the fish are unable to find their food, thus negatively impacting the health of a farm population. This is an advantageous consideration when at the same trying to remove the need for moving parts, which increase manufacture and maintenance costs as well as negatively impacting the reliability of a system.

Accordingly, the arrangement of the detecting means and the light source, and the operation of the controller, ensures that the eyes of the fish are not harmed by the light source. This is done by ensuring that the eyes of the fish are beyond the section which is illuminated by the light source, i.e. that section of the conduit in which the light intensity from the light source would damage the fish's eyes by exposure.

Further preferably the detecting means comprises a sensor which detects an interruption caused by the fish passing the sensor.

Moreover preferably the sensor comprises a beam source and beam detector, providing a beam which is interrupted by the passage of the fish.

Further ideally the sensor detects the leading edge of a fish, and wherein the sensor is spaced apart from the light source in the direction of the second end.

Furthermore preferably the sensor is spaced apart from the light source by a distance of at least 1cm, and more preferably at least 2 cm, or 3 cm.

Preferably, the sensor is spaced apart from the light source by a distance sufficient that by the time the nose of the fish triggers the sensor, the eyes of the fish are beyond the point where the light from the light source could damage them.

According to the invention the control means comprises a switch which immediately triggers the activation of the light source upon detection of a fish.

The light source remains activated while the detection means continues to detect a fish and is deactivated once the detection means no longer detects a fish.

Ideally the control means comprises a timer to deactivate the light source after a predetermined time.

Preferably the internal passage is dimensioned to admit one adult salmon only at a time.

Further ideally the internal passage is dimensioned to admit one smolt only at a time.

Further ideally the internal passage is sufficiently large that the fish is free to swim through it.

Preferably the light source comprises a plurality of sources arranged circumferentially around said section.

Configuring the light source to be static and provide circumferential coverage of the fish allows for the omission of moving parts which in existing treatments are required to provide this coverage of the fish. It is emphasised once more that moving parts increase the maintenance costs and possibly the frequency of maintenance works on the system, and reduce the reliability of the system as a whole, particularly when considering that moving parts subject to an adverse environment such as that under water are more likely to fail. Moreover, the inclusion of moving parts may generate sound underwater which may have an adverse affect on encouraging fish to swim through the unit without the use of force.

Preferably the conduit is generally cylindrical.

Preferably the detecting means comprises a mechanical detector which detects the fish by its movement.

Further, ideally the mechanical detector detects the fish by the movement of water caused by the fish moving.

Preferably the light source is accommodated within internal passage defined by the conduit.

In certain embodiments, the light source comprises a collimated light source.

In certain embodiments, the collimated light source comprises one or more lasers. Further preferably the collimated light source comprises one or more laser diodes. Preferably the light source comprises one or more LEDs.

According to the invention the light source is operable to illuminate a fish within said section with light or immobilise a proportion of parasites without causing having a wavelength suitable to kill substantial damage to the fish.

The wavelength is in the range of 300-500nm. Alternatively the wavelength is in the range of 800-1200nm.

Preferably the light source operates at a power of not more than 3W.

Preferably the apparatus further comprises an actuating means for counting fish in the vicinity of the conduit.

Further preferably the at least one break beam provides the actuating means. Further ideally the at least one break beam is operationally associated with the control means which is further operationally associated with an alerting means, for alerting a farmer if a fish has failed to depart the vicinity of the conduit. Preferably the alerting means comprises a display unit configured to display messages relating to the functionality and operation of the apparatus.

Preferably the apparatus further comprises an image capture means for capturing images of the fish in the vicinity of the conduit.

Further preferably at least one camera provides the image capture means. Further ideally the image capture means is operationally associated with a software package for counting point differences on a surface.

Ideally the software package is capable of detecting point differences on the size scale of parasites affecting fish.

Further preferably the image capture means is operationally associated with a software package for estimating the masses of objects within a captured frame.

### BRIEF DESCRIPTION OF THE DRAWINGS

The present teaching will now be described with reference to the accompanying drawings in which:
Figure 1 illustrates a side elevation of the exemplary embodiment;
Figure 2 illustrates a cross-sectional view of the exemplary embodiment; and
Figure 3 illustrates a plan view of the exemplary embodiment.

### DETAILED DESCRIPTION OF THE DRAWINGS

The present disclosure will now be described with reference to an exemplary apparatus for destroying parasites on fish. It will be understood that the exemplary apparatus is provided to assist in an understanding of the teaching and is not to be construed as limiting in any fashion. Furthermore, elements or components that are described with reference to any one Figure may be interchanged with those of other Figures or other equivalent elements without departing from the spirit of the present teaching. It will be appreciated that for simplicity and clarity of illustration, where considered appropriate, reference numerals may be repeated among the figures to indicate corresponding or analogous elements.

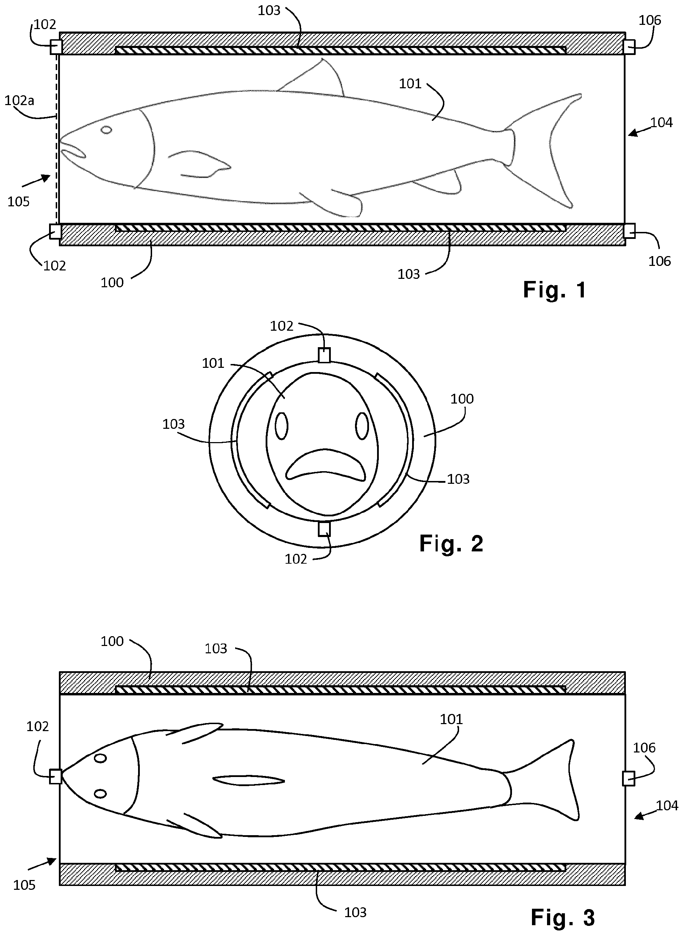

Referring to Figs. 1-3, there is illustrated a plurality of views of a conduit 100 in which a fish 101 maybe accommodated. The fish 101 will trigger a detecting means 102 in the course of its passage through the conduit 100. In the exemplary embodiment, the detecting means is itself operationally associated with a light source 103 such that the detection of the fish 101 in the vicinity of the conduit 100 causes the activation of the light source 103.

The conduit 100 has a first end 104 and second end 105, and defines a passage through which the fish may move from the first end to the second end. A controller (not shown) provides the operational association between the detector and the light source. In the embodiment illustrated, the controller is a simple switch but more sophisticated control systems can be included.

Once activated, a light source 103 provides light of frequency sufficient to destroy parasites but which does not affect the fish 101 in any substantial way. In the exemplary embodiment, the fish 101 is salmon, since sea lice are a problem particular to salmon. It will be appreciated, however, that the apparatus may be adapted to the treatment of other fish susceptible to surface parasites, for example trout.

The light source 103 illuminates a section of the internal passage radially inwardly from substantially all sides simultaneously, such that a fish moving through said section is illuminated from substantially all sides when the light source 103 is activated. The section that is illuminated can be an extended length so that several centimetres of the fish 101 are exposed along its length and around its circumference at a given point in time, or can be a simple ring of light that washes over the fish 101 as it passes through. Other arrangements, such as a pattern of lights within a cylinder can be used (for example a spiral arrangement along the length of a cylinder), provided that the fish 101 is treated on substantially all sides as it moves through the section that is illuminated. In the embodiment illustrated, the light source is shown as a pair of sources that are positioned on either side of the fish to illuminate both flanks of the fish, and extending over the majority of the length of the conduit. It will be appreciated that such an arrangement may be achieved by an array of LEDs or lasers distributed within the interior surface of the conduit, and the number, spatial position and distribution pattern can be varied as required to ensure that the surface of a fish passing through the conduit is substantially illuminated on all sides. The light source need not be provided on two flank sides only, and can extend 360 degrees around the conduit.

Preferably, the light source(s) emit light at a wavelength in a range of 300-500nm. Alternatively or additionally, the light sources may emit light at a wavelength in the range of 800-1200nm. The wavelength is chosen to affect the lice without unduly damaging the flesh of the fish,

Preferably the light source operates at a power of not more than 3W

In the exemplary embodiment the detecting means 102 is positioned in the vicinity of the conduit 100 in such a way as that the light source 103 will be triggered when the eyes of the fish 101 are not within the region of exposure to the light source 103, thus avoiding blinding the fish. This step is advantageous in maintaining the ethical integrity of an apparatus which seeks at the same time to free itself from the need for moving parts (which would target specific spots on the fish 101) and instead "bathe" the fish 101 in the light to destroy parasites. Furthermore, avoiding blinding the fish is also important for the health of the farm population, as without sight the fish will not be able to find their food.

In an exemplary embodiment, the detecting means 102 is a break beam 102a which the fish 101 triggers with its front end. It is envisaged by the inventor that other detecting means are possible, for example a flowmeter can be used to detect turbulence caused by the existence of the fish 101 in the vicinity of the conduit 100, or a mechanical detector such as a contact switch might be triggered by the fish's body; this may then be used in conjunction with calculations of average travel time for the fish between the entrance and the exit of the conduit 100 to estimate when the fish's eyes will be beyond the region of exposure. Where a detector (such as the break beam illustrated) is triggered by the leading edge of the fish 101, the spacing of the detector 102 from the light source 103 is preferably selected so that by the time the nose of the fish 101 triggers the detector, the eyes of the fish 101 are beyond the point where the light from the light source 103 could damage them.

It is envisaged by the inventor that the conduit 100 may be manufactured in a range of dimensions appropriate to the size of the fish 101 a farmer wishes to treat. By way of example, in embodiments involving smolts the internal passage of the conduit 100 may be dimensioned to have a diameter in the approximate range of 20mm to 200mm inclusive. In embodiments involving more mature fish, the conduit may be dimensioned to have a diameter in the approximate range of 60mm to 650mm. These ranges of diameters are provided by way of example only; other ranges of diameters (or diameter values in the approximate range of the above-quoted ranges) are envisaged as being feasible to suit various industrial needs in various contexts. Moreover, in the exemplary embodiment, the conduit 100 is dimensioned such that it is sufficiently large to permit a fish to swim within the interior volume the conduit 100 defines but sufficiently small such that a plurality of fish are impeded from simultaneously occupying the interior volume defined by the conduit 100. In the exemplary embodiment the conduit 100 is a cylinder, however it is envisaged by the inventor that other geometries are possible. The conduit 100 will preferably be designed and selected to permit the fish 101 to swim through the passage with the skin of the fish 101 sufficiently close to the light source(s) to ensure good treatment.

To introduce the fish 101 to the conduit 100 such that it enters the conduit 100 "eyes first", the fish 101 can be encouraged or forced to swim into the tube naturally, e.g. by positioning the conduit as an outlet from a region that the fish 101 is encouraged to leave due to crowding or other environmental induced factors, or towards a region to which the fish is attracted. Alternatively, a gravity drop may be used to exploit the bias of the centre of mass of fish towards their heads. The introduction of a current against which fish must swim, for example provided by an inclined slope up which the fish must swim to exit a tank (not pictured) in the vicinity of the conduit 100 and thus enter the conduit 100, may provide the means of introducing the fish "eyes first". Other means of introducing the fish eyes first are envisaged by the inventor.

The light source 103 may be a laser or plurality of lasers, or another collimated light source such as a laser diode. It is envisaged by the inventor that other light sources may be implemented such as LEDs. This light source 103 requires a power input no greater than 3W, although the power will typically be chosen to ensure that there is a light intensity in a predetermined range at a given distance from the source, i.e. the typical distance from the source to the surface of an averagely sized fish passing through the centre of the conduit. This light source 103 may operate in the wavelength range 300-500 nanometres. The intensity, wavelength and duration of exposure are selected to ensure that the parasites are optimally destroyed without unduly adversely affecting the fish. In the exemplary embodiment, the exposure time may be greater than or equal to 1 second.

To count fish in the vicinity of the conduit 100, it is envisaged by the inventor that an actuating means may be implemented. In one embodiment, the actuating means is a break beam. In an exemplary embodiment, one break beam arrangement 106 for counting is placed in the vicinity of the entrance of the conduit 100, and a second break beam 102 for counting is placed in the vicinity of the exit of the conduit 100. A fish count is advantageous information to a fish farmer, who will want to track the percentage of his farm population successfully treated. In the illustrated embodiment, the actuating means comprising the pair of break beams located in the vicinity of the entrance and exit of the conduit 100 respectively are further operationally connected with the controller which may be further connected to an alerting means (not pictured) for alerting a user such as a farmer that a fish has failed to exit the conduit 100. This may, for example, provide the user the option to cancel the process and extract the fish from the conduit 100. This is beneficial to fish welfare and reduces the possible amount of time a farmer might spend without realising a fish is stuck. In the exemplary embodiment, the alerting means is a display unit such as an LCD screen positioned remotely at a control station or control panel, or e.g. within a mobile app controlling the operation of the apparatus. It is envisaged by the inventor that other alerting means are possible, including but not limited to an optical alerting mechanism such as a flashing LED or an audio alert.

In addition to counting fish in the vicinity of conduit 100, an image capture means (not pictured) such as a camera or plurality of cameras may be implemented for counting parasites on the fish. In the exemplary embodiment, the image capture means is operationally associated with a software package with point detection sensitivity suitable for counting the parasites affecting fish. In one embodiment, the software package counts the parasites autonomously and as such may comprise artificial intelligence or other means of autonomously counting parasites on fish. It is envisaged by the inventor that this parasite counting process may be conducted in real-time during the operation of the apparatus, or alternatively after the fact. Counting parasites on fish is advantageous for a farmer in determining how efficacious a given treatment is and ultimately the health of their farm population. In one embodiment, a camera may be placed in the vicinity of the entrance to the conduit 100 and furthermore a second camera may be placed in the vicinity of the exit of the conduit 100, to make possible comparison between the population of lice on the fish 101 before and after it has passed through the conduit for treatment.

In a further embodiment, the image capture means may be associated with a software package configured to estimate the masses of objects in a captured frame. This will find utility with farmers who need to accurately estimate biomass in their farm population at a given time for example for regulatory purposes. A farmer who wishes to maintain an organic certificate typically must comply with an upper biomass limit of 10kg/cubic metre. Calculations of biomass are typically performed using an estimation or combined estimations of approximately: how many fish are in a given area, what weight these fish are, how much feed have they consumed. These estimations can be time consuming, inaccurate and there is typically little room for movement with regulatory bodies regarding figures. Autonomous and accurate calculation of biomass is thus of great utility to fish farmers.

As has been mentioned, an advantageous feature of the present disclosure is that there are no moving parts. Given the adverse environment in which the present disclosure and relevant prior art must operate, the use of moving parts in the present disclosure would not only reduce the reliability of the apparatus, but also increase the cost of manufacture and purchase. The present disclosure may also provide indiscriminate 360 degree coverage of the body of the fish without the technical demand of a camera or other means of detecting the sea lice. This avoids the occurrence of false or failed detections of sea lice which can arise from, for example, technical faults in a camera or computer program.

As discussed in the foregoing, the term 'destroy' as used in 'destroy parasites' in this context can mean to kill or to paralyse (partially or entirely, temporarily or permanently). In some embodiments, once the sea lice have been subjected to the output of the light source 103 the fish 101 may be washed/rinsed to remove parasites remaining which may be dead or paralysed on the surface of the fish 101. In some embodiments, once the sea lice have been subjected to the output of the light source the fish 101 may directed through a sweeping means to remove parasites remaining which may be dead or paralysed on the surface of the fish 101. By way of example, said sweeping means may comprise a partially resilient/flexible membrane which traverses the surface of the fish 101 causing the removal of parasites remaining which may be dead or paralysed on the surface of the fish 101. Such a sweeping means can be integrated into the conduit, after the fish has passed the light source.

It will be appreciated by the person of skill in the art that various modifications may be made to the above described embodiments without departing from the scope of the present invention which is defined by the scope of the claims.

It will be understood by those skilled in the art that the operation of the system has been described with reference to particular values such as wavelength and power which are provided by way of example only, it will be understood that alternative values may be used. For example, the values may change when the experimental setup is scaled or modified within the scope of the present disclosure. Moreover, it will be understood by those skilled in the art that the absence of moving parts in the exemplary embodiment is indeed by way of example only. In this way it will be understood that the teaching is to be limited only in the light of the appended claims,

Similarly the words comprises/comprising when used in the specification are used to specify the presence of stated formations, integers, steps or components but do not preclude the presence or addition of one or more additional formations, integers, steps, components or groups thereof.

It will be understood that while exemplary features of an apparatus for destroying parasites on fish have been described that such an arrangement is not to be construed as limiting the invention to such features. A non-claimed method for destroying/removing parasites from fish may be controlled by a controller implemented in software, firmware, hardware, or a combination thereof. In one mode, the method is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. The controller may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

The processor(s) may be programmed to perform the functions of the method for removing/destroying parasites on fish, such as by monitoring the break beam or other sensors, and triggering the light source to be activated for a sufficient duration of time to treat the fish. The processor(s) is a hardware device for executing software, particularly software stored in memory. Processor(s) can be any custom made or commercially available processor, a primary processing unit (CPU), an auxiliary processor among several processors associated with a computer, a semiconductor based microprocessor (in the form of a microchip or chip set), a macro-processor, or generally any device for executing software instructions.

Memory is associated with processor(s) and can include any one or a combination of volatile memory elements (e.g., random access memory (RAM, such as DRAM, SRAM, SDRAM, etc.)) and non-volatile memory elements (e.g., ROM, hard drive, tape, CDROM, etc.). Moreover, memory may incorporate electronic, magnetic, optical, and/or other types of storage media. Memory can have a distributed architecture where various components are situated remote from one another, but are still accessed by processor(s).

The software in memory may include one or more separate programs. The separate programs comprise ordered listings of executable instructions for implementing logical functions in order to implement the functions of the modules. In the example of heretofore described, the software in memory includes the one or more components of the method and is executable on a suitable operating system (O/S).

The present disclosure may include components provided as a source program, executable program (object code), script, or any other entity comprising a set of instructions to be performed. When a source program, the program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, and Ada.

When the method is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this disclosure, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. Any process descriptions or blocks in the Figures, should be understood as representing modules, segments, or portions of code which include one or more executable instructions for implementing specific logical functions or steps in the process, as would be understood by those having ordinary skill in the art.

The above detailed description of embodiments of the disclosure is not intended to be exhaustive nor to limit the disclosure to the exact form disclosed. While specific examples for the disclosure are described above for illustrative purposes, those skilled in the relevant art will recognize various modifications are possible within the disclosure. For example, while processes and blocks have been demonstrated in a particular order, different implementations may perform routines or employ systems having blocks, in an alternate order, and some processes or blocks may be deleted, supplemented, added, moved, separated, combined, and/or modified to provide different combinations or sub-combinations. Each of these processes or blocks may be implemented in a variety of alternate ways. Also, while processes or blocks are at times shown as being performed in sequence, these processes or blocks may instead be performed or implemented in parallel or may be performed at different times. The results of processes or blocks may be also held in a non-persistent store as a method of increasing throughput and reducing processing requirements.

## Claims

1. An apparatus for facilitating the treatment of parasites on fish, comprising;
a conduit having first and second open ends and an internal passage to accommodate a fish passing from the first end to the second end through the internal passage;
a light source adapted to illuminate a section of the internal passage radially inwardly from substantially all sides simultaneously, such that a fish moving through said section is illuminated from substantially all sides when the light source is activated;
a detecting means for detecting a fish moving through the conduit, **characterised in that**
the light source remains activated while the detecting means continues to detect a fish and is deactivated once the detecting means no longer detects a fish; and **in that**
a control means is configured to activate the light source in response to the detection of a fish by the detection means, the control means comprising a switch which immediately triggers the activation of the light source upon detection of a fish, the detecting means being positioned relative to the light source, and the control means being configured to activate the light source, only when the eyes of the fish are beyond the section illuminated by the light source;
further **characterised in that** the light source is operable to illuminate a fish within said section with light having a wavelength suitable to kill or immobilise a proportion of parasites without causing substantial damage to the fish, and said wavelength is in the range of 300-500 nm or in the range of 800-1200nm.

2. The apparatus of claim 1, wherein the detecting means comprises a sensor which detects an interruption caused by the fish passing the sensor.

3. The apparatus of claim 2, wherein the sensor comprises a beam source and a beam detector, providing a beam which is interrupted by the passage of the fish; and/or
wherein the sensor detects the leading edge of a fish, and wherein the sensor is spaced apart from the light source in the direction of the second end.

4. The apparatus of claim 3, wherein the sensor is spaced apart from the light source by a distance of at least 3 cm; and/or
wherein the sensor is spaced apart from the light source by a distance sufficient that by the time the nose of the fish triggers the sensor, the eyes of the fish are beyond the point where the light from the light source could damage them.

5. The apparatus of any preceding claim; wherein the internal passage is dimensioned to admit one adult salmon only at a time; or
wherein the internal passage is dimensioned to admit one smolt only at a time.

6. The apparatus of any preceding claim, wherein the light source comprises a plurality of sources arranged circumferentially around said section; and/or
wherein the conduit is generally cylindrical.

7. The apparatus as claimed in any preceding claim, wherein the light source is accommodated within the internal passage defined by the conduit.

8. The apparatus as claimed in any preceding claim, wherein the light source comprises a collimated light source;
wherein the collimated light source comprises one or more lasers, or one or more laser diodes.

9. The apparatus as claimed in any one of claims 1-7, wherein the light source comprises one or more LEDs.

10. The apparatus of any previous claim, further comprising an actuating means for counting fish in the vicinity of the conduit.

11. The apparatus of claim 10, wherein at least one break beam provides the actuating means.

12. The apparatus of claim 11, wherein the at least one break beam is operationally associated with the control means which is further operationally associated with an alerting means, for alerting a farmer if a fish has failed to depart the vicinity of the conduit.

13. The apparatus of any previous claim, further comprising an image capture means for capturing images of the fish in the vicinity of the conduit;

14. The apparatus of claim 13, wherein at least one camera provides the image capture means;
wherein optionally the image capture means is operationally associated with a software package for counting point differences on a surface; and
wherein optionally the software package is capable of detecting point differences on the size scale of parasites affecting fish.

15. The apparatus of claim 13, wherein the image capture means is operationally associated with a software package for estimating the masses of objects within a captured frame.

## Patentansprüche

1. Vorrichtung zum Erleichtern der Behandlung von Parasiten auf Fischen, die Folgendes umfasst:
einen Kanal, der ein erstes und ein zweites offenes Ende und einen inneren Durchlass aufweist, der einen Fisch aufnimmt, der den inneren Durchlass von dem ersten Ende zu dem zweiten Ende passiert;
eine Lichtquelle, die dazu ausgelegt ist, einen Abschnitt des inneren Durchlasses radial nach innen von im Wesentlichen allen Seiten gleichzeitig zu beleuchten, sodass ein Fisch, der sich durch den Abschnitt bewegt, von im Wesentlichen allen Seiten beleuchtet wird, wenn die Lichtquelle angeschaltet ist;
eine Erfassungseinrichtung zum Erfassen eines Fisches, der sich durch den Kanal bewegt, **dadurch gekennzeichnet, dass** die Lichtquelle angeschaltet bleibt, während die Erfassungseinrichtung weiterhin einen Fisch erfasst, und abgeschaltet wird, sobald die Erfassungseinrichtung keinen Fisch mehr erfasst; und dadurch,
dass eine Steuereinrichtung dazu konfiguriert ist, die Lichtquelle als Reaktion auf das Erfassen eines Fisches durch die Erfassungseinrichtung anzuschalten, wobei die Steuereinrichtung
einen Schalter umfasst, der sofort das Anschalten der Lichtquelle auslöst, wenn ein Fisch erfasst wird, wobei die Erfassungseinrichtung relativ zu der Lichtquelle positioniert ist und die Steuereinrichtung
dazu konfiguriert ist, die Lichtquelle erst dann anzuschalten, wenn die Augen des Fisches über den durch die Lichtquelle beleuchteten Abschnitt hinaus sind;
ferner **dadurch gekennzeichnet, dass** die Lichtquelle betrieben werden kann, um einen Fisch in dem Abschnitt mit Licht zu beleuchten, das eine Wellenlänge aufweist, die dazu geeignet ist, einen Anteil von Parasiten abzutöten oder bewegungsunfähig zu machen, ohne den Fisch erheblich zu schädigen, und die Wellenlänge in dem Bereich von 300-500 nm oder in dem Bereich von 800-1200 nm liegt.

2. Vorrichtung nach Anspruch 1, wobei die Erfassungseinrichtung einen Sensor umfasst, der eine Unterbrechung erfasst, die dadurch verursacht wird, dass der Fisch den Sensor passiert.

3. Vorrichtung nach Anspruch 2, wobei der Sensor eine Strahlquelle und eine Strahlerfassungsvorrichtung umfasst, die einen Strahl bereitstellen, der durch das Passieren des Fisches unterbrochen wird; und/oder
wobei der Sensor die Vorderkante eines Fisches erfasst und wobei der Sensor in Richtung des zweiten Endes von der Lichtquelle beabstandet ist.

4. Vorrichtung nach Anspruch 3, wobei der Sensor um einen Abstand von mindestens 3 cm von der Lichtquelle beabstandet ist; und/oder
wobei der Sensor um einen Abstand von der Lichtquelle beabstandet ist, der ausreicht, damit zu dem Zeitpunkt, an dem die Nase des Fisches den Sensor auslöst, die Augen des Fischen über den Punkt hinaus sind, an dem sie durch Licht von der Lichtquelle beschädigt werden könnten.

5. Vorrichtung nach einem der vorhergehenden Ansprüche, wobei der innere Durchlass so bemessen ist, dass er nur einen ausgewachsener Lachs auf einmal einlässt; oder
wobei der innere Durchlass so bemessen ist, dass er nur einen Smolt auf einmal einlässt.

6. Vorrichtung nach einem der vorangehenden Ansprüche, wobei die Lichtquelle eine Vielzahl von Quellen umfasst, die in Umfangsrichtung um den Abschnitt herum angeordnet ist; und/oder
wobei der Kanal allgemein zylindrisch ist.

7. Vorrichtung nach einem der vorhergehenden Ansprüche, wobei die Lichtquelle innerhalb des durch den Kanal definierten inneren Durchlasses untergebracht ist.

8. Vorrichtung nach einem der vorhergehenden Ansprüche, wobei die Lichtquelle eine kollimierte Lichtquelle umfasst;
wobei die kollimierte Lichtquelle einen oder mehrere Laser oder eine oder mehrere Laserdioden umfasst.

9. Vorrichtung nach einem der Ansprüche 1-7, wobei die Lichtquelle eine oder mehrere LEDs umfasst.

10. Vorrichtung nach einem der vorhergehenden Ansprüche, die ferner eine Betätigungseinrichtung zum Zählen von Fischen in der näheren Umgebung um den Kanal umfasst.

11. Vorrichtung nach Anspruch 10, wobei mindestens ein Unterbrechungsstrahl die Betätigungseinrichtung bereitstellt.

12. Vorrichtung nach Anspruch 11, wobei der mindestens eine Unterbrechungsstrahl betriebsmäßig der Steuereinrichtung zugeordnet ist, die ferner betriebsmäßig einer Warneinrichtung zugeordnet ist, die einen Fischfarmer warnt, wenn ein Fisch die nähere Umgebung um den Kanal nicht verlassen hat.

13. Vorrichtung nach einem der vorhergehenden Ansprüche, die ferner eine Bildaufnahmeeinrichtung zum Aufnehmen von Bildern des Fisches in der näheren Umgebung um den Kanal umfasst.

14. Vorrichtung nach Anspruch 13, wobei mindestens eine Kamera die Bildaufnahmeeinrichtung bereitstellt;
wobei optional die Bildaufnahmeeinrichtung betriebsfähig einem Softwarepaket zum Zählen von Punktunterschieden auf einer Fläche zugeordnet ist; und
wobei optional das Softwarepaket in der Lage ist, Punktunterschiede in der Größenordnung von Parasiten zu erfassen, die Fische befallen.

15. Vorrichtung nach Anspruch 13, wobei die Bildaufnahmeeinrichtung betriebsfähig einem Softwarepaket zum Schätzen der Massen von Objekten innerhalb eines aufgenommenen Einzelbilds zugeordnet ist.

## Revendications

1. Appareil permettant de faciliter le traitement de parasites sur des poissons, comprenant ;
un conduit ayant des première et seconde extrémités ouvertes et un passage interne pour recevoir un poisson passant de la première extrémité à la seconde extrémité à travers le passage interne ;
une source lumineuse conçue pour éclairer une section du passage interne radialement vers l'intérieur depuis pratiquement tous les côtés simultanément, de sorte qu'un poisson se déplaçant à travers ladite section est éclairé depuis pratiquement tous les côtés lorsque la source lumineuse est activée ;
un moyen de détection permettant de détecter un poisson se déplaçant à travers le conduit, **caractérisé en ce que** la source lumineuse reste activée tant que le moyen de détection continue à détecter un poisson et se désactive dès que le moyen de détection ne détecte plus de poisson ; et **en ce que**
un moyen de commande est configuré pour activer la source lumineuse en réponse à la détection d'un poisson par le moyen de détection, le moyen de commande comprenant
un interrupteur qui déclenche immédiatement l'activation de la source lumineuse lors de la détection d'un poisson, le moyen de détection étant positionné par rapport à la source lumineuse, et le moyen de commande étant configuré pour activer la source lumineuse, uniquement lorsque les yeux du poisson sont au-delà de la section éclairée par la source lumineuse ;
**caractérisé en outre en ce que** la source lumineuse peut fonctionner pour éclairer un poisson dans ladite section avec une lumière ayant une longueur d'onde appropriée pour tuer ou immobiliser une proportion de parasites sans causer de dommages substantiels au poisson, et ladite longueur d'onde est dans la plage de 300 à 500 nm ou dans la plage de 800-1 200 nm.

2. Appareil selon la revendication 1, dans lequel le moyen de détection comprend un capteur qui détecte une interruption provoquée par le capteur de passage de poisson.

3. Appareil selon la revendication 2, dans lequel le capteur comprend une source de faisceau et un détecteur de faisceau, fournissant un faisceau qui est interrompu par le passage du poisson ; et/ou
dans lequel le capteur détecte le bord d'attaque d'un poisson, et dans lequel le capteur est espacé de la source lumineuse dans la direction de la seconde extrémité.

4. Appareil selon la revendication 3, dans lequel le capteur est espacé de la source lumineuse d'une distance d'au moins 3 cm ; et/ou
dans lequel le capteur est espacé de la source lumineuse d'une distance suffisante pour qu'au moment où le nez du poisson déclenche le capteur, les yeux du poisson soient au-delà du point où la lumière de la source lumineuse pourrait les endommager.

5. Appareil selon une quelconque revendication précédente ; dans lequel le passage interne est dimensionné pour n'admettre qu'un seul saumon adulte à la fois ; ou
dans lequel le passage interne est dimensionné pour admettre un seul saumoneau à la fois.

6. Appareil selon une quelconque revendication précédente, dans lequel la source lumineuse comprend une pluralité de sources disposées circonférentiellement autour de ladite section ;
et/ou
dans lequel le conduit est généralement cylindrique.

7. Appareil selon une quelconque revendication précédente, dans lequel la source lumineuse est logée à l'intérieur du passage interne défini par le conduit.

8. Appareil selon une quelconque revendication précédente, dans lequel la source lumineuse comprend une source lumineuse collimatée ;
dans lequel la source lumineuse collimatée comprend un ou plusieurs lasers, ou une ou plusieurs diodes laser.

9. Appareil selon l'une quelconque des revendications 1 à 7, dans lequel la source lumineuse comprend une ou plusieurs LED.

10. Appareil selon une quelconque revendication précédente, comprenant en outre un moyen d'actionnement permettant de compter les poissons à proximité du conduit.

11. Appareil selon la revendication 10, dans lequel au moins un faisceau de rupture fournit le moyen d'actionnement.

12. Appareil selon la revendication 11, dans lequel l'au moins un faisceau de rupture est associé de manière opérationnelle au moyen de commande qui est en outre associé de manière opérationnelle à un moyen d'alerte, permettant d'alerter un éleveur si un poisson n'a pas quitté les environs du conduit.

13. Appareil selon une quelconque revendication précédente, comprenant en outre un moyen de capture d'image permettant de capturer des images du poisson à proximité du conduit.

14. Appareil selon la revendication 13, dans lequel au moins une caméra fournit le moyen de capture d'image ;
dans lequel éventuellement le moyen de capture d'image est associé de manière opérationnelle à un progiciel permettant de compter les différences de points sur une surface ; et
dans lequel éventuellement le progiciel est capable de détecter des différences de point sur l'échelle de taille des parasites affectant les poissons.

15. Appareil selon la revendication 13, dans lequel le moyen de capture d'image est associé de manière opérationnelle à un progiciel permettant d'estimer les masses d'objets dans une trame capturée.
